# EUROPEAN PATENT SPECIFICATION

(11) **EP 4 471 367 B1**
(45) Date of publication and mention of the grant of the patent: **01.10.2025**
(21) Application number: 24000054.7
(22) Date of filing: 21.05.2024
(51) Int. Cl.: F28D 20/00

(54) **THERMAL ENERGY STORAGE**
WÄRMEENERGIESPEICHER
STOCKAGE D'ÉNERGIE THERMIQUE

(30) Priority: 30.05.2023 PL 44503823
(43) Date of publication of application: 04.12.2024
(73) Proprietor: Polbud-Pomorze Sp. z o.o., 88-170 Pakosc (PL)
(72) Inventor: Kaptur, Ryszard, 88-170 Pakosc (PL); Slowikowski, Daniel, 42-450 Lazy (PL); Bartoszek, Zygmunt, 32-064 Rudawa (PL); Ohl, Marian, 41-935 Bytom (PL); Mazur, Tomasz, 03-984 Warszawa (PL)
(74) Representative: Lech, Wojciech

(56) References cited:
- CN-A- 103 423 798
- US-A1- 2009 101 303
- US-B2- 9 027 634

## Description

The subject matter of the invention is a thermal energy storage characterized, in particular, by overpressure conditions that enable higher temperatures of the heat exchanger, while the manufacturing method reduces the need to excavate significant quantities of ground.

Patent application JPS58117962A describes an underground thermal energy storage system in the form of a regular polygon, comprising a buried heat exchanger connected to a solar collector to form an underground heat storage zone. The sides of the storage tank are thermally insulated.

According to the description provided in Chinese patent application CN101818957A, a system and method for utilizing underground aquifers to store heat or provide heating or cooling is disclosed. This system involves injecting hot or cold water from a heat source or cooling system into an aquifer located within the heat storage area. A baffle is installed around the heat storage area, and a sealing agent is placed in the gap between the original underground soil and the baffle rock. Perforated pipes are installed at the bottom and both ends of the continuous wall surrounding the isolation zone before flooding, and then the wall is flooded. An anti-leakage agent is poured into the perforated pipes under high pressure to prevent leakage. Additionally, an insulating base is installed at the bottom layer of the heat storage area to prevent seepage. The sealed insulating base of the original underground stone fissure is filled with a sealing agent.

In contrast, a seasonal or daily underground heat storage system is known from the description in International patent application WO2020231299A1. The method of heat storage involves the introduction of energy into the ground for storage and the removal of energy for use. A fixed volume of not less than 5 cubic metres of ground is used, the centre of gravity of which is between 0.1 m and 10 m below ground level, said volume being bounded by an enclosure made of waterproofing and thermal insulation material with a thermal resistance of not less than 1.0 (m2K)/W. The ground heat accumulator may have a circular, spiral or other shape depending on the development of the site.

On the other hand, a borehole type underground heat storage system capable of blocking groundwater is known from the description of the Korean patent application KR20210158660A. More specifically, the present invention relates to a borehole type underground heat storage system capable of blocking groundwater to prevent heat loss through groundwater by installing a blocking cofferdam to block water in a water-permeable layer around the thermal energy storage body.

Chinese patent application CN103423798A also discloses an underground heat reservoir for a solar thermal system for geological interseasonal heat storage. The thermal insulation shell is buried in the earth's crust below the surface. A solid heat accumulator wrapped in a thermal insulation shell is placed inside the thermal insulation shell. Filling materials for burying the thermal insulation jacket are distributed in the residual space, outside the space occupied by the thermal insulation jacket in the excavation. The heat exchangers and the heat exchanger medium supply pipe are buried in the permanent storage tank. The underground heat accumulator can store heat during the off-season, store solar energy during hot periods, be used to heat buildings during the heating season, and is cost-effective.

Other underground thermal energy storage arrangements have also been disclosed, for which the analysis has been omitted from this description (e.g.: US2012152488A1, CN218001846U, CN107270375A). However, in all of the disclosed thermal energy storages, there are none where overpressure is used to achieve high bed temperatures.

US 9027634 B2 discloses a a thermal energy storage according to the preamble of claim 1.

The essence of the invention is a thermal energy storage containing a closed insulation, inside of which there is an enclosed space for heat accumulation, in which there is a heat exchanger comprising pipes for a flowing fluid, and a fluid. The storage is characterised in that it comprises a hydrophore pump connected to the enclosed space by a conduit, and that the gas permeability of the closed insulation is less than 10 mD, making the thermal energy storage suitable for pressures ranging from 100 kPa to 3 MPa in the upper part of the enclosed space for heat accumulation.

The enclosed space for heat accumulation advantageously contains mineral material.

Optionally, the temperature of the flowing fluid in pipes is at least 100°C.

Thermal energy storage is located underground and has a depth in the range from 10 to 150 m.

The pipes for the flowing heat exchange fluid are advantageously placed in the mineral material in the form of vertical concrete blocks, between which the ground containing the fluid in the form of water is located.

Advantageously, the side walls of the closed insulation are between 40 and 450 cm thick and consist of at least two layers: a thermal insulation layer between 30 and 200 cm thick, and a structural hydro-insulation layer between 10 and 250 cm thick, with the thermal insulation layer being a layer containing polymeric foam-forming resins and the structural hydro-insulation layer being a layer of special technical concrete with a gas permeability of less than 10 mD.

It is favorable if the upper wall of the closed insulation is 45 to 1300 cm thick and contains at least three layers: a thermal insulation layer with a thickness ranging from 5 to 600 cm, a structural hydro-insulation layer, and an expansion-drainage layer. The thermal insulation layer consists of polymeric foam-forming resins, while the structural hydro-insulation layer, which is 20 to 200 cm thick, comprises a layer of special concrete with a gas permeability of less than 10mD. Additionally, the expansion-drainage layer is composed of aggregate with a grain size of 16 to 64 mm and a thickness ranging from 20 to 500 cm.

The bottom wall of the closed insulation should be at least 50 cm thick and should include at least one layer of a jet-injected screen or rock mass, which serves as a natural barrier with a gas permeability of less than 10 mD.

The energy storage according to the invention can be mad by first making vertical slotted holes in the ground substrate with a slotting grab and then filling them with a bentonite slurry to ensure the stability of the slots. A concrete mix of special technical concretes is then placed into the drilled excavations, which, once set, forms a layer of lateral insulation,walls with a gas permeability of less than 10 mD. In the next step, slotted excavations in ground 5b are made locally into which the pipes 3 and concrete mixture are inserted in turn, which, once set, form concrete blocks 5a between which is the native ground containing fluid, mainly water. The upper wall of the closed insulation is then formed by successively forming an expansion-drainage layer and a concrete structural hydro-insulation layer, the structural hydro-insulation layer having, after setting, a gas permeability of less than 10 mD, determined by laboratory or Torrent apparatus. In the final step, the side and top thermal insulation layers are formed, the material for forming these walls comprising foam-forming polymer resins.

The advantageous effect of the invention is that it enables the construction of thermal energy storage wherein there is high pressure (at least above atmospheric pressure), facilitating the attainment of elevated temperatures within the heat exchanger bed (enclosed space of the storage). Moreover, this pressure promotes the filling of any bed spaces, particularly with water, by displacing gas, thereby significantly enhancing the thermal capacity of the system. The system's watertightness is ensured by a layer with defined gas permeability. The construction of the exchanger bed serves to shield the pipes from the movement of the rock mass and the high pressure and temperature within the storage. The construction method of the thermal energy storage is relatively straightforward, and the excavation of native ground is significantly reduced through the use of the slotted excavation technique. The reservoirs can be situated in areas beneath buildings, thus not interfering with the architectural spatial order of the urban development plan.

The invention in the implementation example is illustrated in the drawing, with individual figures presented as follows:

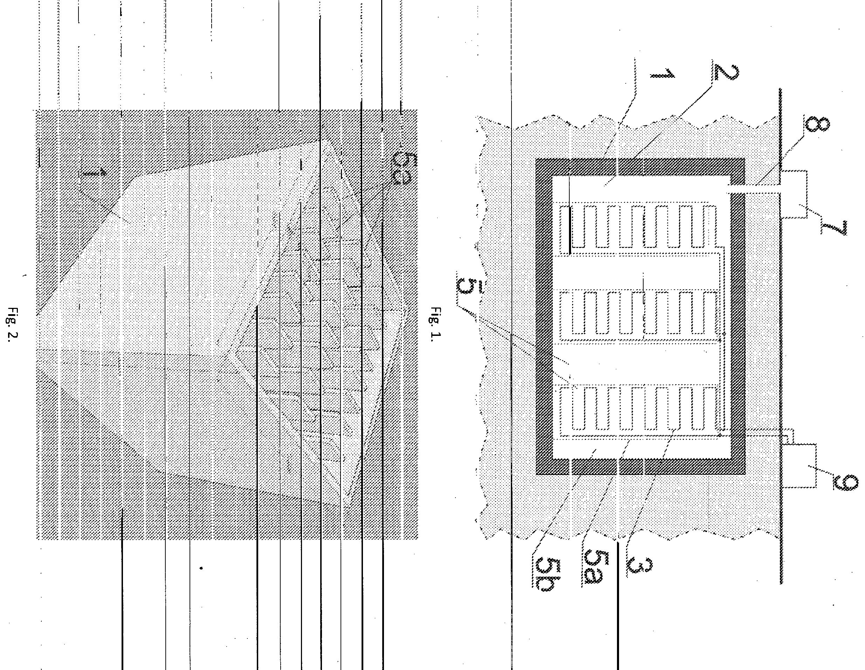

Fig. 1. Thermal energy storage in cross-section, located underground.
Fig. 2. Structure of the thermal energy storage in perspective view.

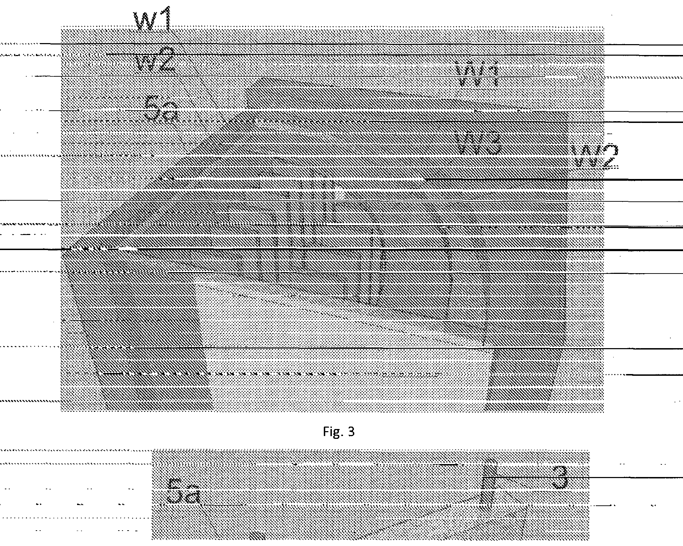

Fig. 3. Structure of the thermal energy storage with its layer structure in perspective view.
Fig. 4. Concrete block with pipes for flowing fluid - perspective view.

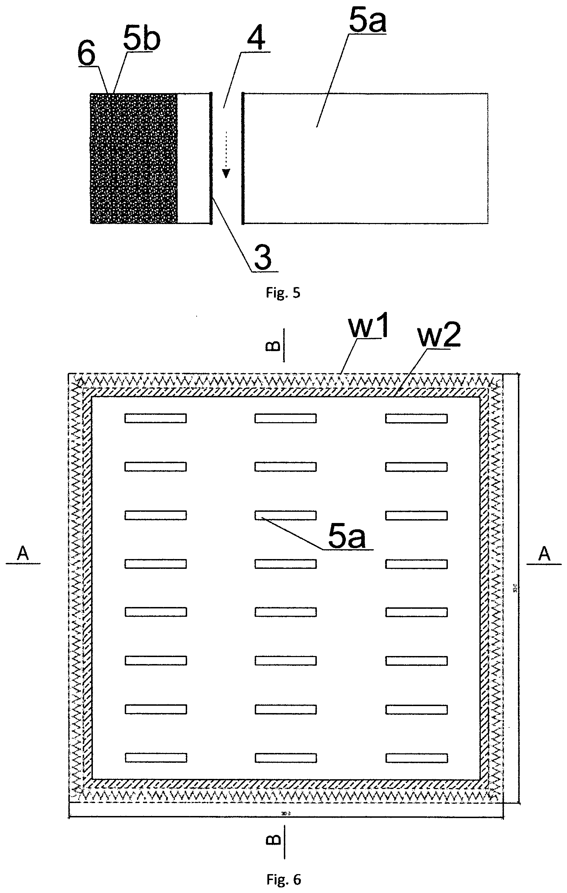

Fig. 5. Ground fragment with an adjacent concrete block, in which the pipe for flowing fluid is located.
Fig. 6. Top view of thermal energy storage - cross-sectional view.

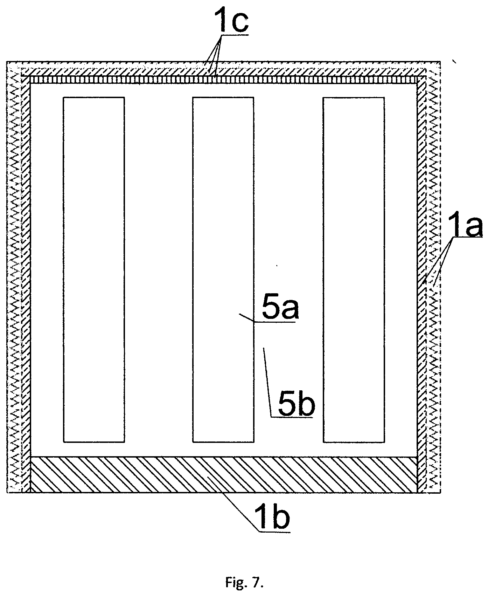

Fig. 7. Section A-A from Fig. 6.

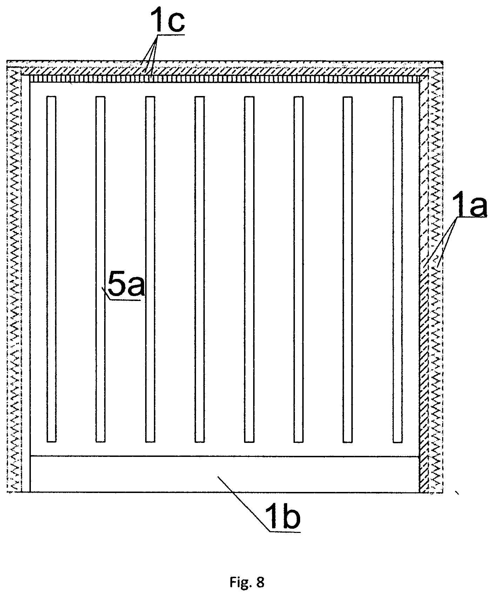

Fig. 8. Section B-B from Fig. 6.

### Example of an embodiment

In the implementation example, the thermal energy storage consists of closed insulation 1 within which there is an enclosed space 2 for heat accumulation. In the enclosed space 2, there is a heat exchanger containing pipes 3 for flowing fluid 4 in the form of circulating water as a heat exchange medium. In the enclosed space 2, there can also mineral material 5 of two types. It consists of concrete blocks 5a in which the pipes 3 are located, and ground 5b located between these concrete blocks 5a. The ground 5b is in the form of sand and stones naturally occurring in the geodetic location of the thermal energy storage. The ground 5b contains fluid 6 in the form of water, which contributes positively to the high thermal capacity of the system. In the thermal energy storage, the pressure in the upper part of the enclosed space 2 for heat accumulation is in the range of 100 kPa to 3 MPa, and this overpressure (relative to atmospheric pressure) can be maintained by the hydrophore pump 7 by injecting additional water 6 into the ground 5b, providing a fixed overpressure value depending on the planned peak temperature values. The gas permeability of the closed insulation 1 is less than 10 mD, i.e., 9,86923·10⁻¹⁵ m², as determined by laboratory or Torrent apparatus. It is therefore possible to maintain a stable overpressure value in the closed insulation 1. Optionally, in addition to the use of a hydrophore pump 7, the overpressure in the closed insulation 1 can be obtained thermally by means of a high temperature of the flowing fluid 4 in the pipes 3. The flowing fluid 4 is advantageously water, which circulates in the system of pipes 3 due to the operation of a pump 9 of thermo-circulation. This water can be electrically heated from renewable energy sources (also through solar collectors), particularly during periods of energy surplus in the electric energy infrastructure network. In the implementation example, the temperature of the flowing fluid 4 is 100°C, while the tightness of the closed insulation 1 causes the heating of the concrete blocks 5a and the ground 5b with water 6, accompanied by the creation of an overpressure in the highest part of the enclosed space 2. The overpressure allows a higher temperature of the heat exchanger with a lower heat flow. The tank is located underground and has a depth h of between 10 and 150 m. The side walls 1a of the closed insulation 1 have a thickness of between 40 and 450 cm and consist of at least two layers: a thermal insulation layer w1 with a thickness of between 30 and 200 cm and a structural hydro-insulation layer w2 with a thickness of between 10 and 250 cm. The thermal insulation layer w1 is a layer containing foamed polymer resins, while the structural hydro-insulation layer w2 is a layer of special concrete with a gas permeability of less than 10 mD. The upper wall 1c of the closed insulation 1 is between 45 and 1300 cm thick and contains at least three layers: a thermal insulation layer W1 with a thickness ranging from 5 to 600 cm, a structural hydro-insulation layer W2, an expansion-drainage layer W3. The thermal insulation layer W1 is a layer containing polymeric foam-forming resins, the structural hydro-insulation layer W2 has a thickness of 20 to 200 cm, consisting of a layer of special concrete with a gas permeability of less than 10 mD, and the expansion-drainage layer W3 consists of a layer of aggregate with a grain size of 16 to 64 mm and has a thickness of 20 to 500 cm. The bottom wall 1b of the closed insulation 1 has a thickness of at least 50 cm and comprises at least one layer in the form of a barrier screen produced by jet injection, or it is formed by a rock mass, which is a natural barrier with a gas permeability of less than 10 mD.

In the implementation example, the method of construction of the thermal energy storage is based on the fact that, first of all, vertical slotted holes are made in the ground substrate using a slotting grab, and these holes are filled with a bentonite slurry to ensure the stability of the slots. A concrete mix made of special technical concretes with a minimum water resistance of W2 is then placed in the drilled slots, which, after setting, will form the side walls 1a of the closed insulation 1, with a gas permeability of less than 10 mD. In the next stage, the bottom wall 1b of the closed insulation 1 is formed using the drilling and concrete injection method. Subsequently, slotted excavations in ground 5b are made locally into which the pipes 3 and concrete mixture are inserted in turn, which, once set, form concrete blocks 5a between which is the native ground 5b containing water 6. In the next step, the upper wall 1c of the closed insulation 1 is formed by successively forming the expansion-drainage layer W3 and the concrete structural hydro-insulation layer (W2), the structural hydro-insulation layer W2 having, after setting, a gas permeability of less than 10 mD, determined by laboratory or Torrent apparatus. In the final step, the thermal insulation layers W1 of the side walls 1a and the top wall 1b are formed, the material for forming these walls comprising foam-forming polymer resins.

In a less favorable option for the implementation of the invention, it is also possible to place water 6 as a heat-storing material within the enclosed space 2 in which the pipes 3 for the flowing liquid 4 are immersed. Then the mineral material 5 in the form of concrete blocks 5a and ground 5b is unnecessary.

## Claims

1. Thermal energy storage comprising a closed insulation (1) inside which there is an enclosed space (2) for heat accumulation, in which there is a heat exchanger comprising pipes (3) for a flowing fluid (4), and a fluid (6), **characterised in that** it comprises a hydrophore pump (7) connected to the enclosed space (2) by a conduit (8), and that the gas permeability of the closed insulation (1) is less than 10 mD (millidarcy), making the thermal energy storage suitable for pressures ranging from 100 kPa to 3 MPa in the upper part of the enclosed space (2) for heat accumulation.

2. Thermal energy storage according to claim 1, **characterised in that** the enclosed space (2) for heat accumulation also contains a mineral material (5).

3. Thermal energy storage according to claim 1, **characterised in that** the temperature of the flowing fluid (4) is at least 100°C.

4. Thermal energy storage according to claim 1, 2 or 3, **characterised in that** it is located underground and has a depth (h) in the range from 10 to 150 m.

5. Thermal energy storage according to claim 2, **characterised in that** the pipes (3) for a flowing fluid (4) are located in the mineral material (5) in the form of vertical concrete blocks (5a) between which there is ground (5b) containing a fluid (6) in the form of ground water.

6. Thermal energy storage according to claim 1, **characterised in that** the side walls (1a) of the closed insulation (1) are 40 to 450 cm thick and consist of at least two layers: a thermal insulation layer (w1) with a thickness of 30 to 200 cm, and a structural hydroinsulation layer (w2) with a thickness of 10 to 250 cm, the thermal insulation layer (w1) being a layer containing polymeric foam-forming resins and the structural hydroinsulation layer (w2) being a layer of special concrete with a gas permeability of less than 10 mD.

7. Thermal energy storage according to claim 1, **characterised in that** the upper wall (1c) of the closed insulation (1) is 45 to 1300 cm thick and contains at least three layers: a thermal insulation layer (W1) with a thickness in the range from 5 to 600 cm, a structural hydro-insulation layer (W2), an expansion-drainage layer (W3), the thermal insulation layer (W1) being a layer containing polymeric foam-forming resins, while the structural hydroinsulating layer (W2), 20 to 200 cm thick, is made up of a layer of special concrete with a gas permeability of less than 10mD, and the expansion-drainage layer (W3) is made up of a layer of aggregate with a grain size of 16 to 64 mm and a thickness of 20 to 500 cm.

8. Thermal energy storage according to claim. 1, **characterised in that** the bottom wall (1b) of the closed insulation (1) has a thickness of at least 50 cm and comprises at least one layer in the form of a barrier screen produced by means of jet injection or is formed by a rock mass, which acts as a natural barrier with a gas permeability of less than 10 mD.

## Patentansprüche

1. Wärmespeicher mit einer geschlossenen Isolierung (1), in deren Innerem sich ein umschlossener Raum (2) zur Wärmespeicherung befindet, in dem ein Wärmetauscher mit Rohren (3) für ein strömendes Fluid (4) angeordnet ist und ein Fluid (6) umfasst, **dadurch gekennzeichnet, dass** er eine Hydrophorpumpe (7) umfasst, die über eine Leitung (8) mit dem umschlossenen Raum (2) verbunden ist, und dass die Gasdurchlässigkeit der geschlossenen Isolierung (1) weniger als 10 mD beträgt, wodurch der Wärmespeicher für Drücke im Bereich von 100 kPa bis 3 MPa im oberen Teil des umschlossenen Raums (2) zur Wärmespeicherung geeignet ist.

2. Wärmespeicher nach Anspruch 1, **dadurch gekennzeichnet, dass** der umschlossene Raum (2) zur Wärmespeicherung zusätzlich ein mineralisches Material (5) enthält.

3. Wärmespeicher nach Anspruch 1, **dadurch gekennzeichnet, dass** die Temperatur des strömenden Fluids (4) mindestens 100 °C beträgt.

4. Wärmespeicher nach einem der Ansprüche 1 bis 3, **dadurch gekennzeichnet, dass** er unterirdisch angeordnet ist und eine Tiefe (h) im Bereich von 10 bis 150 m aufweist.

5. Wärmespeicher nach Anspruch 2, **dadurch gekennzeichnet, dass** die Rohre (3) für ein strömendes Fluid (4) im mineralischen Material (5) in Form von vertikalen Betonblöcken (5a) angeordnet sind, zwischen denen sich Boden (5b) befindet, der ein Fluid (6) in Form von Grundwasser enthält.

6. Wärmespeicher nach Anspruch 1, **dadurch gekennzeichnet, dass** die Seitenwände (1a) der geschlossenen Isolierung (1) 40 bis 450 cm dick sind und aus mindestens zwei Schichten bestehen: einer Wärmedämmschicht (w1) mit einer Dicke von 30 bis 200 cm und einer strukturellen Hydroisolationsschicht (w2) mit einer Dicke von 10 bis 250 cm, wobei die Wärmedämmschicht (w1) eine Schicht aus polymeren, schaumbildenden Harzen und die strukturelle Hydroisolationsschicht (w2) eine Schicht aus Spezialbeton mit einer Gasdurchlässigkeit von weniger als 10 mD ist.

7. Wärmespeicher nach Anspruch 1, **dadurch gekennzeichnet, dass** die obere Wand (1c) der geschlossenen Isolierung (1) 45 bis 1300 cm dick ist und mindestens drei Schichten enthält: eine Wärmedämmschicht (W1) mit einer Dicke im Bereich von 5 bis 600 cm, eine strukturelle Hydroisolationsschicht (W2) und eine Expansions-Drainageschicht (W3), wobei die Wärmedämmschicht (W1) eine Schicht aus polymeren, schaumbildenden Harzen ist, die strukturelle Hydroisolationsschicht (W2) eine 20 bis 200 cm dicke Schicht aus Spezialbeton mit einer Gasdurchlässigkeit von weniger als 10 mD bildet und die Expansions-Drainageschicht (W3) aus einer Schicht aus Zuschlagstoffen mit einer Korngröße von 16 bis 64 mm und einer Dicke von 20 bis 500 cm besteht.

8. Wärmespeicher nach Anspruch 1, **dadurch gekennzeichnet, dass** die Bodenwand (1b) der geschlossenen Isolierung (1) eine Dicke von mindestens 50 cm aufweist und mindestens eine Schicht in Form einer mittels Strahlinjektion hergestellten Sperrschicht umfasst oder durch eine Gesteinsmasse gebildet ist, die als natürliche Barriere mit einer Gasdurchlässigkeit von weniger als 10 mD wirkt

## Revendications

1. Accumulateur d'énergie thermique comprenant une isolation fermée (1), à l'intérieur de laquelle se trouve un espace clos (2) destiné à l'accumulation de chaleur, dans lequel est disposé un échangeur de chaleur comprenant des tuyaux (3) pour un fluide en circulation (4), et un fluide (6), **caractérisé en ce qu'**il comprend une pompe hydrophore (7) reliée à l'espace clos (2) par un conduit (8), et **en ce que** la perméabilité au gaz de l'isolation fermée (1) est inférieure à 10 mD, rendant l'accumulateur adapté à des pressions comprises entre 100 kPa et 3 MPa dans la partie supérieure de l'espace clos (2) destiné à l'accumulation de chaleur.

2. Accumulateur d'énergie thermique selon la revendication 1, **caractérisé en ce que** l'espace clos (2) destiné à l'accumulation de chaleur contient en outre un matériau minéral (5).

3. Accumulateur d'énergie thermique selon la revendication 1, **caractérisé en ce que** la température du fluide en circulation (4) est d'au moins 100 °C.

4. Accumulateur d'énergie thermique selon l'une quelconque des revendications 1 à 3, **caractérisé en ce qu'**il est enterré et présente une profondeur (h) comprise entre 10 et 150 m.

5. Accumulateur d'énergie thermique selon la revendication 2, **caractérisé en ce que** les tuyaux (3) pour un fluide en circulation (4) sont disposés dans le matériau minéral (5) sous forme de blocs de béton verticaux (5a), entre lesquels se trouve un sol (5b) contenant un fluide (6) sous forme d'eau souterraine.

6. Accumulateur d'énergie thermique selon la revendication 1, **caractérisé en ce que** les parois latérales (1a) de l'isolation fermée (1) ont une épaisseur de 40 à 450 cm et comportent au moins deux couches : une couche d'isolation thermique (w1) d'une épaisseur de 30 à 200 cm et une couche d'étanchéité structurelle (w2) d'une épaisseur de 10 à 250 cm, la couche d'isolation thermique (w1) étant constituée de résines polymères moussantes et la couche d'étanchéité structurelle (w2) étant constituée de béton spécial ayant une perméabilité au gaz inférieure à 10 mD.

7. Accumulateur d'énergie thermique selon la revendication 1, **caractérisé en ce que** la paroi supérieure (1c) de l'isolation fermée (1) a une épaisseur de 45 à 1300 cm et comprend au moins trois couches : une couche d'isolation thermique (W1) d'une épaisseur de 5 à 600 cm, une couche d'étanchéité structurelle (W2) et une couche de dilatation-drainage (W3), la couche d'isolation thermique (W1) étant constituée de résines polymères moussantes, la couche d'étanchéité structurelle (W2), d'une épaisseur de 20 à 200 cm, étant constituée de béton spécial ayant une perméabilité au gaz inférieure à 10 mD, et la couche de dilatation-drainage (W3) étant constituée de granulats ayant une granulométrie de 16 à 64 mm et une épaisseur de 20 à 500 cm.

8. Accumulateur d'énergie thermique selon la revendication 1, **caractérisé en ce que** la paroi inférieure (1b) de l'isolation fermée (1) a une épaisseur d'au moins 50 cm et comprend au moins une couche sous forme d'un écran d'étanchéité réalisé par injection dirigée, ou est constituée d'une masse rocheuse agissant comme une barrière naturelle ayant une perméabilité au gaz inférieure à 10 mD.
